# EUROPEAN PATENT APPLICATION

(11) **EP 2 608 583 A1**
(43) Date of publication of application: **26.06.2013**
(21) Application number: 10856035.0
(22) Date of filing: 18.08.2010
(51) Int. Cl.: H04W 8/00, H04B 17/00

(54) **METHOD AND DEVICE FOR OBTAINING CAPABILITY OF A MOBILE TERMINAL BY A BASE STATION SUB SYSTEM**

(71) Applicant: ZTE Corporation, Shenzhen, Guangdong 518057 (CN)
(72) Inventor: JIANG, Ning, Shenzhen Guangdong 518057 (CN); KE, Changwei, Shenzhen Guangdong 518057 (CN); WANG, Xinhui, Shenzhen Guangdong 518057 (CN)
(74) Representative: Portch, Daniel
(86) International application number: PCT/CN2010/076110
(87) International publication number: WO 2012/022037

(57) **Abstract**

A method and device for a base station subsystem acquiring capability of a mobile terminal are disclosed in the present invention, which can actively detect supporting capability of single antenna interference suppression and cancellation of the mobile terminal in the condition that the mobile terminal does not report the supporting capability of single antenna interference suppression and cancellation during the discontinuous transmission, thereby being able to utilize a single antenna interference suppression and cancellation technique effectively, and enabling a GSM network to still obtain an excellent whole network performance in the environment of interference limitation.

## Description

### Technical Field

The present invention relates to the filed of mobile communication, and particularly, to a method and device for a base station subsystem acquiring the capability of a mobile terminal in a Global System for Mobile Communications (GSM).

### Background of the Related Art

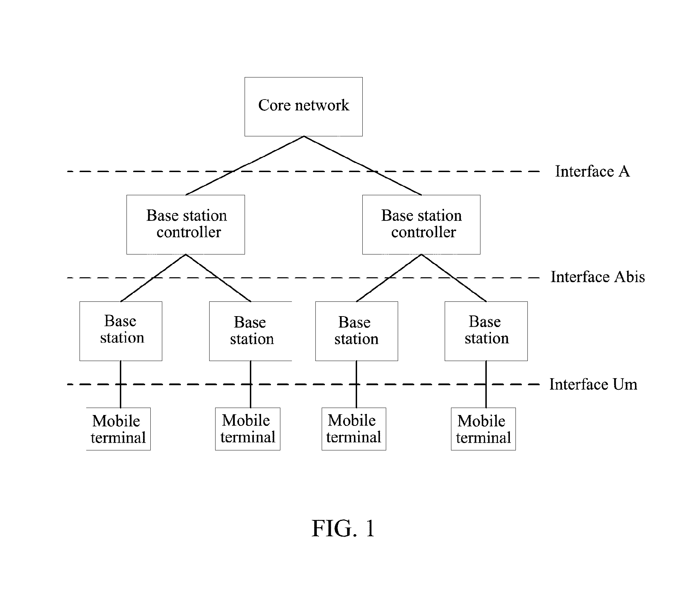

A network architecture of the GSM system is as shown in FIG. 1, including three layers: a core network, a Base Station Controller (BSC) and a Base Station (BTS), and the BSC and BTS can be called as a Base Station Subsystem (BSS), wherein, an interface between the core network and the BSC is called as interface A, an interface between the BSC and the BTS is called as interface Abis, and an interface between the BTS and a mobile terminal is called as interface Um; the core network, BSC and BTS work in cooperation, and provide an integrated mobile voice service function for the mobile terminal.

In a GSM radio network, coverage and services are provided by a plurality of base stations, and a commercial GSM radio network always needs dozens or even hundreds of base stations to complete the coverage and meet traffic demands, but frequency resources which can be utilized by the GSM network are extremely limited, and thus, a pair of contradictions is constituted. Therefore, in the GSM system, a cellular structure is adopted to solve the contradiction between the traffic demands and the limitation of frequency resources in a mobile communication system. However, a frequency multiplexing way brought by the cellular structure inevitably introduces quite a number of co-channel interferences and adjacent channel interferences to the GSM network, and the interference level of these co-channel interferences and adjacent channel interferences becomes more severe along with the closeness of frequency multiplexing degrees, which makes the GSM network turn into a network in interference limitation.

With the evolution of the technology, a co-spectrum operation between the GSM and an

Evolved High-Speed Packet Access (HSPA+) or a Long Term Evolution (LTE) will cause that an operator wish to dynamically share the limited frequency spectrum resources in different radio technologies (the GSM, HSPA+, LTE, etc.), wherein an application scenario is: the HSPA+ or LTE occupying most of the frequency spectrum resources and the GSM occupying a less part of the frequency spectrum resources, but the number of users of the GSM does not decrease sharply. Therefore, it is required that the GSM network uses comparatively much less frequency spectrum resources to provide voice services for these users, at this point, using a closer frequency multiplexing way for the GSM system is one of ways to solve the dilemma of frequency spectrum resources, but apparently, the closer frequency multiplexing also bring more co-channel interferences and adjacent channel interferences inevitably, and also makes the GSM network become a network in larger interference limitation.

The appearance of a single antenna interference suppression and cancellation technique enables the mobile terminal to utilize the advantage of this technique in the aspect of interference cancellation to obtain a better voice processing performance in the environment of interference limitation. For example, certain mobile terminals supporting the technique of single antenna interference suppression and cancellation can still obtain an excellent voice processing performance in a scenario that a co-channel interference is 0dB or 3dB. The technique of single antenna interference suppression and cancellation enables the base station subsystem to allocate certain channels with comparatively larger interference and worse quality to the mobile terminals supporting the technique of single antenna interference suppression and cancellation but not to allocate them to the traditional mobile terminals which don't support the technique, and through such processing, an excellent whole network performance in the environment of interference limitation can still be obtained.

In the related art, the mobile terminal reports the supporting capability of single antenna interference suppression and cancellation of the mobile terminal through an interface between the mobile terminal and the base station subsystem, but if the mobile terminal supporting the single antenna interference suppression and cancellation does not report its supporting capability due to certain reasons such as the software design defect, the base station subsystem can't know the supporting capability of single antenna interference suppression and cancellation of the mobile terminal.

### Summary of the Invention

A base station subsystem can continuously exert co-channel interferences to specific frames of one or more multiframe periods, and in the condition that a mobile terminal does not report a supporting capability of single antenna interference suppression and cancellation of the mobile terminal, it actively detects the supporting capability of single antenna interference suppression and cancellation of the mobile terminal. However, this way can only be used in the condition of a base station performing continuous transmission, and during the discontinuous transmission, how the base station subsystem knows the supporting capability of single antenna interference suppression and cancellation of the mobile terminal is a problem required to be solved urgently.

The technical problem required to be solved by the present invention is to provide a method and device for the base station subsystem acquiring the capability of the mobile terminal, which can acquire the supporting capability of single antenna interference suppression and cancellation of the mobile terminal during the discontinuous transmission.

In order to solve the above technical problem, the present invention provides a method for a base station subsystem acquiring the capability of a mobile terminal, which comprises:
the base station subsystem exerting one round or multiple rounds of co-channel interferences to a Silence Insertion Description (SID) frame of a mobile terminal with a supporting capability of single antenna interference suppression and cancellation to be tested, analyzing received signal parameters in measurement reports reported by the mobile terminal during the duration of exerting the co-channel interferences, and judging whether the mobile terminal has the supporting capability of single antenna interference suppression and cancellation; or,
the base station subsystem exerting one round or multiple rounds of co-channel interferences to the SID frame of the mobile terminal with the supporting capability of single antenna interference suppression and cancellation to be tested and other downlink frames in specific types, analyzing the received signal parameters in the measurement reports reported by the mobile terminal during the duration of exerting the co-channel interferences, and judging whether the mobile terminal has the supporting capability of single antenna interference suppression and cancellation.

Preferably, before exerting one round or multiple rounds of co-channel interferences, the method further comprises:
the base station subsystem determining the mobile terminal with the supporting capability of single antenna interference suppression and cancellation to be tested;
wherein, the base station subsystem determines the mobile terminal with the supporting capability of single antenna interference suppression and cancellation to be tested according to one or multiple kinds of the following information:
   (1) parameters reflecting an interference processing capability of the mobile terminal in the measurement reports sent by the mobile terminal;
   (2) uplink measurement results;
   (3) traffic load.

Preferably, said other downlink frames in specific types comprise a Tone Channel (TCH) frame and/or a Slow Associated Control Channel (SACCH) frame.

Preferably, in the step of exerting one round or multiple rounds of co-channel interferences,
after performing Gaussian-Filtered Minimum Shift Keying (GMSK) modulation on a co-channel interference signal and a measured signal respectively, the base station subsystem performs vector addition on a modulated co-channel interference signal and a modulated measured signal to compose a downlink signal and send the downlink signal to the mobile terminal; the co-channel interference signal is an interference signal with the same phase as the measured signal, or is an interference signal whose phase is different from a phase of the measured signal by π/2; or,
after directly performing adaptive Quadrature Phase Shift Keying (QPSK) modulation on the co-channel interference signal and the measured signal, the base station subsystem sends a modulated downlink signal to the mobile terminal.

Preferably, the step of the base station subsystem exerting one round or multiple rounds of co-channel interferences to an SID frame of a mobile terminal with a supporting capability of single antenna interference suppression and cancellation to be tested, analyzing received signal parameters in measurement reports reported by the mobile terminal during the duration of exerting the co-channel interferences, and judging whether the mobile terminal has the supporting capability of single antenna interference suppression and cancellation comprises: the base station subsystem exerting one round of co-channel interference to the SID frame of the mobile terminal with the supporting capability of single antenna interference suppression and cancellation to be tested, analyzing the received signal parameters in the measurement reports reported by the mobile terminal during the duration of exerting the co-channel interference, and determining whether to continue to exert the co-channel interference based on an analysis result, if it is determined to continue to exert the co-channel interference, continuing to exert the co-channel interference to the SID frame of the mobile terminal until determining whether the mobile terminal has the supporting capability of single antenna interference suppression and cancellation;
the step of the base station subsystem exerting one round or multiple rounds of co-channel interferences to the SID frame of the mobile terminal with the supporting capability of single antenna interference suppression and cancellation to be tested and other downlink frames in specific types, analyzing the received signal parameters in the measurement reports reported by the mobile terminal during the duration of exerting the co-channel interferences, and judging whether the mobile terminal has the supporting capability of single antenna interference suppression and cancellation comprises: the base station subsystem exerting one round of co-channel interference to the SID frame of the mobile terminal with the supporting capability of single antenna interference suppression and cancellation to be tested and other downlink frames in specific types, analyzing the received signal parameters in the measurement reports reported by the mobile terminal during the duration of exerting the co-channel interference, and determining whether to continue to exert the co-channel interference based on the analysis result, if it is determined to continue to exert the co-channel interference, continuing to exert the co-channel interference to the SID frame of the mobile terminal and the other downlink frames in specific types until determining whether the mobile terminal has the supporting capability of single antenna interference suppression and cancellation.

Preferably, in the step of the base station subsystem exerting one round of co-channel interference, analyzing the received signal parameters in the measurement reports reported by the mobile terminal during the duration of exerting the co-channel interference, and judging whether the mobile terminal has the supporting capability of single antenna interference suppression and cancellation,
when an analysis result obtained by exerting the co-channel interference is superior to a preset threshold, the base station subsystem determines that the mobile terminal has the supporting capability of single antenna interference suppression and cancellation.

Preferably, in the step of the base station subsystem exerting multiple rounds of co-channel interferences, analyzing the received signal parameters in the measurement reports reported by the mobile terminal during the duration of exerting the co-channel interferences, and judging whether the mobile terminal has the supporting capability of single antenna interference suppression and cancellation,
if an analysis result obtained by exerting one round of the co-channel interference therein is superior to the preset threshold, the base station subsystem determines that the mobile terminal has the supporting capability of single antenna interference suppression and cancellation; or,
if analysis results obtained by exerting all rounds of the co-channel interferences are superior to the preset threshold, the base station subsystem determines that the mobile terminal has the supporting capability of single antenna interference suppression and cancellation.

Preferably, the received signal parameters comprise universe received signal quality parameters and subset received signal quality parameters; or, the received signal parameters comprise universe received signal quality parameters, universe received signal strength parameters, subset received signal quality parameters and subset received signal strength parameters;
the step of analyzing the received signal parameters in the measurement reports reported by the mobile terminal during the duration of exerting the co-channel interferences comprises:
seeking an average value of universe received signal quality parameter values in N successively latest measurement reports, and judging whether an obtained result is less than a first result threshold, and, seeking an average value of subset received signal quality parameter values in the N successively latest measurement reports, and judging whether an obtained result is less than a second result threshold; or,
seeking a standard deviation of received signal quality parameter values in N successively latest measurement reports of which the universe received signal quality parameter values are less than a first condition threshold, and judging whether an obtained result is less than a third result threshold, and, seeking a standard deviation of received signal quality parameter values in N successively latest measurement reports of which the subset received signal quality parameter values are less than a second condition threshold, and judging whether an obtained result is less than a fourth result threshold; or,
seeking an average value of universe received signal quality parameter values in measurement reports containing universe received signal strength parameter values less than a third condition threshold, and judging whether an obtained result is less than a fifth result threshold, and, seeking an average value of subset received signal quality parameter values in measurement reports containing subset received signal strength parameter values less than a fourth condition threshold, and judging whether an obtained result is less than a sixth result threshold; or,
seeking a standard deviation of universe received signal quality parameter values in measurement reports containing universe received signal strength parameter values less than a fifth condition threshold, and judging whether an obtained result is less than a seventh result threshold, and, seeking a standard deviation of subset received signal quality parameter values in measurement reports containing subset received signal strength parameter values less than a sixth condition threshold, and judging whether an obtained result is less than an eighth result threshold;
wherein, N is an integer.

In order to solve the above technical problem, the present invention provides a device for acquiring capability of a mobile terminal, which comprises a capability acquisition unit, wherein:
the capability acquisition unit is configured to: exert one round or multiple rounds of co-channel interferences to a Silence Insertion Description (SID) frame of a mobile terminal with a supporting capability of single antenna interference suppression and cancellation to be tested, or exert one round or multiple rounds of co-channel interferences to the SID frame of the mobile terminal with the supporting capability of single antenna interference suppression and cancellation to be tested and other downlink frames in specific types, analyze received signal parameters in measurement reports reported by the mobile terminal during the duration of exerting the co-channel interferences, and judge whether the mobile terminal has the supporting capability of single antenna interference suppression and cancellation.

Preferably, the device further comprises a test target determination unit, wherein:
the test target determination unit is configured to: determine the mobile terminal with the supporting capability of single antenna interference suppression and cancellation to be tested according to one or multiple kinds of the following information, and inform the capability acquisition unit of: (1) parameters reflecting an interference processing capability of the mobile terminal in the measurement reports sent by the mobile terminal; (2) uplink measurement results; (3) traffic load.

Preferably, said other downlink frames in specific types comprise a Tone Channel (TCH) frame and/or a Slow Associated Control Channel (SACCH) frame.

Preferably, the capability acquisition unit is configured to: after performing Gaussian-Filtered Minimum Shift Keying (GMSK) modulation on a co-channel interference signal and a measured signal respectively, perform vector addition on a modulated co-channel interference signal and a modulated measured signal to compose a downlink signal to be sent to the mobile terminal, and the co-channel interference signal is an interference signal with the same phase as the measured signal, or is an interference signal whose phase is different from a phase of the measured signal by π/2; or, after directly performing adaptive Quadrature Phase Shift Keying (QPSK) modulation on the co-channel interference signal and the measured signal, send a modulated downlink signal to the mobile terminal.

Preferably, the capability acquisition unit is configured to: exert one round of co-channel interference to the SID frame of the mobile terminal with the supporting capability of single antenna interference suppression and cancellation to be tested, analyze the received signal parameters in the measurement reports reported by the mobile terminal during the duration of exerting the co-channel interference, and determine whether to continue to exert the co-channel interference based on an analysis result, if it is determined to continue to exert the co-channel interference, continue to exert the co-channel interference to the SID frame of the mobile terminal until determining whether the mobile terminal has the supporting capability of single antenna interference suppression and cancellation; or, exert one round of co-channel interference to the SID frame of the mobile terminal with the supporting capability of single antenna interference suppression and cancellation to be tested and the other downlink frames in specific types, analyze the received signal parameters in the measurement reports reported by the mobile terminal during the duration of exerting the co-channel interference, and determine whether to continue to exert the co-channel interference based on the analysis result, if it is determined to continue to exert the co-channel interference, continue to exert the co-channel interference to the SID frame of the mobile terminal and the other downlink frames in specific types until determining whether the mobile terminal has the supporting capability of single antenna interference suppression and cancellation.

Preferably, the capability acquisition unit is configured to: after exerting one round of co-channel interference, when an analysis result obtained by exerting the co-channel interference is superior to a preset threshold, determine that the mobile terminal has the supporting capability of single antenna interference suppression and cancellation; or, after exerting multiple rounds of co-channel interferences, if an analysis result obtained by exerting one round of the co-channel interference therein is superior to the preset threshold, determine that the mobile terminal has the supporting capability of single antenna interference suppression and cancellation; or, after exerting multiple rounds of co-channel interferences, if analysis results obtained by exerting all rounds of the co-channel interferences are superior to the preset threshold, determine that the mobile terminal has the supporting capability of single antenna interference suppression and cancellation.

Preferably, the received signal parameters comprise universe received signal quality parameters and subset received signal quality parameters; or, the received signal parameters comprise universe received signal quality parameters, universe received signal strength parameters, subset received signal quality parameters and subset received signal strength parameters;

the capability acquisition unit is configured to: when analyzing the received signal parameters in the measurement reports reported by the mobile terminal during the duration of exerting the co-channel interferences, seek an average value of universe received signal quality parameter values in N successively latest measurement reports, and judge whether an obtained result is less than a first result threshold, and seek an average value of subset received signal quality parameter values in the N successively latest measurement reports, and judge whether an obtained result is less than a second result threshold; or, seek a standard deviation of received signal quality parameter values in the N successively latest measurement reports of which the universe received signal quality parameter values are less than a first condition threshold, and judge whether an obtained result is less than a third result threshold, and, seek a standard deviation of received signal quality parameter values in the N successively latest measurement reports of which the subset received signal quality parameter values are less than a second condition threshold, and judge whether an obtained result is less than a fourth result threshold; or, seek an average value of universe received signal quality parameter values in measurement reports containing universe received signal strength parameter values less than a third condition threshold, and judge whether an obtained result is less than a fifth result threshold, and, seek an average value of subset received signal quality parameter values in measurement reports containing subset received signal strength parameter values less than a fourth condition threshold, and judge whether an obtained result is less than a sixth result threshold; or, seek a standard deviation of universe received signal quality parameter values in measurement reports containing universe received signal strength parameter values less than a fifth condition threshold, and judge whether an obtained result is less than a seventh result threshold, and, seek a standard deviation of subset received signal quality parameter values in measurement reports containing subset received signal strength parameter values less than a sixth condition threshold, and judge whether an obtained result is less than an eighth result threshold; wherein, N is an integer.

With the present invention, during the discontinuous transmission, in the condition that the mobile terminal does not report the supporting capability of single antenna interference suppression and cancellation, the network can actively detect the supporting capability of single antenna interference suppression and cancellation of the mobile terminal, thereby being able to utilize a single antenna interference suppression and cancellation technique effectively, and enabling a GSM network to still obtain an excellent whole network performance in the environment of interference limitation.

### Brief Description of Drawings

FIG. 1 is a network architecture of a traditional GSM system.
FIG. 2 is a flow diagram of the base station subsystem actively acquiring capability of the mobile terminal in the way of exerting the co-channel interference to Silence Insertion Description (SID) frames according to the example 1 of the present invention.
FIG. 3 is a schematic diagram of the base station subsystem exerting the interference to SID frames with regard to full-rate speech coding according to the example 1 of the present invention.
FIG. 4 is a schematic diagram of the base station subsystem exerting the interference to SID frames with regard to half-rate speech coding according to the example 1 of the present invention.
FIG. 5 is a schematic diagram of the base station subsystem exerting the interference to SID frames with regard to adaptive multi-rate speech coding according to the example 1 of the present invention.
FIG. 6 is a flow diagram of the base station subsystem actively acquiring capability of the mobile terminal in the way of exerting the co-channel interference to a TCH frame, SID frame and SACCCH frame unitedly according to the example 2 of the present invention.
FIG. 7 is a schematic diagram of the base station subsystem exerting the interference to a TCH frame, SID frame and SACCCH frame unitedly with regard to full-rate speech coding according to the example 2 of the present invention.
FIG. 8 is a schematic diagram of the base station subsystem exerting the interference to a TCH frame, SID frame and SACCCH frame unitedly with regard to half-rate speech coding according to the example 2 of the present invention.
FIG. 9 is a schematic diagram of the base station subsystem exerting the interference to a TCH frame, SID frame and SACCCH frame unitedly with regard to adaptive multi-rate speech coding according to the example 2 of the present invention.
FIG. 10 is a schematic diagram of the device for acquiring capability of the mobile terminal according to the example of the present invention.

### Preferred Embodiments of the Present Invention

The basic conception of the present invention is, during the discontinuous transmission, by analyzing measurement reports reported by a mobile terminal, and in combination with an analysis of the feed-back measurement reports after exerting one round or multiple rounds of detective co-channel interferences to an SID frame of the mobile terminal or to a combination of the SID frame of the mobile terminal and other downlink frames in specific types, a base station subsystem acquiring a supporting capability of single antenna interference suppression and cancellation of the mobile terminal.

Specifically, the base station subsystem actively acquiring the supporting capability of single antenna interference suppression and cancellation of the mobile terminal can include two stages.

In the first stage, the base station subsystem determines a mobile terminal with a supporting capability of single antenna interference suppression and cancellation to be tested, that is, the base station subsystem determines a mobile terminal on which the acquisition of supporting capability of single antenna interference suppression and cancellation is required to be performed.

Specifically, the mobile terminal can be determined through parameters, such as received signal quality parameters and/or received signal strength parameters, reflecting an interference processing capability of the mobile terminal in the measurement reports sent by the mobile terminal; or the base station subsystem also can determine a certain mobile terminal or certain mobile terminals served by certain carrier frequencies or cells on which the acquisition of the supporting capability of single antenna interference suppression and cancellation is required to be performed based on uplink measurement results; or the base station subsystem also can determine a certain mobile terminal or certain mobile terminals served by certain carrier frequencies or cells on which the acquisition of the supporting capability of single antenna interference suppression and cancellation is required to be performed based on traffic load.

A default mobile terminal with supporting capability of single antenna interference suppression and cancellation to be tested also can be set. For example, if the acquisition of the supporting capability of single antenna interference suppression and cancellation is fixedly required to be performed on a certain specified mobile terminal or certain specified mobile terminals, or if the acquisition of the supporting capability of single antenna interference suppression and cancellation is required to be performed on all terminals, the step of the base station subsystem determining the mobile terminal with the supporting capability of single antenna interference suppression and cancellation to be tested in this stage can be omitted.

In the second stage, the base station subsystem exerts one round or multiple rounds of co-channel interferences to the SID frame of the mobile terminal with the supporting capability of single antenna interference suppression and cancellation to be tested, analyzes the received signal parameters in the measurement reports reported by the mobile terminal during the duration of exerting the co-channel interferences, and judges whether the mobile terminal has the supporting capability of single antenna interference suppression and cancellation; or the base station subsystem exerts one round or multiple rounds of co-channel interferences to the SID frame of the mobile terminal with the supporting capability of single antenna interference suppression and cancellation to be tested and other downlink frames in specific types, analyzes the received signal parameters in the measurement reports reported by the mobile terminal during the duration of exerting the co-channel interferences, and judges whether the mobile terminal has the supporting capability of single antenna interference suppression and cancellation.

Wherein, the other downlink frames in specific types include a Tone Channel (TCH) frame and/or a Slow Associated Control Channel (SACCH) frame, that is, it can perform co-channel interferences to the SID frame only, or perform united co-channel interferences to the TCH frame and SID frame, or perform united co-channel interferences to the TCH frame, SID frame and SACCH frame.

The above received signal parameters can include universe received signal quality parameters and subset received signal quality parameters; and it also can include relevant parameters such as the universe received signal quality parameters, universe received signal strength parameters, the subset received signal quality parameters and subset received signal strength parameters and so on.

In the second stage, the way of exerting one round or multiple rounds of co-channel interferences can be: firstly exerting one round of co-channel interference to the SID frame or the combination of the SID frame and other downlink frames in specific types, wherein power strength and lasting time of the exerted co-channel interference can be set according to a policy of the base station subsystem, and then analyzing relevant parameters, such as universe received signal quality and universe received signal strength and so on, in one or multiple measurement reports reported by the mobile terminal during the duration of exerting the co-channel interference, for example, whether these parameters are superior to a set threshold, and the base station subsystem decides whether to continue to exert the co-channel interference based on analysis results. It also needs to analyze relevant parameters, such as subset received signal quality and subset received signal strength and so on, in one or multiple measurement reports reported by the mobile terminal during the duration of exerting the co-channel interference, for example, whether these parameters are superior to the set threshold, and the base station subsystem decides whether to continue to exert the co-channel interference based on analysis results. Thresholds applied to the universe received signal quality and universe received signal strength are independent of thresholds applied to the subset received signal quality and subset received signal strength. If a base station determines to continue to exert another round based on the analysis results, the power strength and lasting time of the exerted co-channel interference can also be set according to the policy of the base station subsystem, which can be equal to or different from corresponding settings of the previous round. Afterwards, the base station subsystem analyzes the relevant parameters such as the universe received signal quality, universe received signal strength, subset received signal quality and subset received signal strength and so on in one or multiple measurement reports reported by the mobile terminal during the duration of exerting this round of co-channel interference, for example, whether these parameters are superior to the set threshold, and the threshold can be equal to or different from corresponding settings of the previous round. The base station subsystem decides whether to continue to exert the co-channel interference based on the analysis results. By analogy, until the base station subsystem considers that a situation of the capability of single antenna interference suppression and cancellation of the mobile terminal has been achieved, the process of the base station subsystem actively acquiring the capability of single antenna interference suppression and cancellation of the mobile terminal during the discontinuous transmission is completed.

In the second stage, the base station subsystem can decide the capability of single antenna interference suppression and cancellation of the mobile terminal by analyzing the relevant parameters such as the universe received signal quality, universe received signal strength, subset received signal quality and subset received signal strength and so on in the measurement reports reported by the mobile terminal after exerting the co-channel interference and in combination with various relevant thresholds preset by the base station subsystem. The specific particular values of decision of the capability of single antenna interference suppression and cancellation of the mobile terminal, such as multiple rounds of exerted co-channel interferences, power strength and lasting time of the exerted co-channel interferences, and the set thresholds used for the judgment and so on, can be implemented according to the policy of the base station subsystem. For example, when the base station subsystem can judge whether the mobile terminal has the supporting capability of single antenna interference suppression and cancellation by exerting only one round of co-channel interference, and when an analysis result obtained by exerting co-channel interference is superior to a preset threshold, the base station subsystem determines that the mobile terminal has the supporting capability of single antenna interference suppression and cancellation; when the base station subsystem judges whether the mobile terminal has the supporting capability of single antenna interference suppression and cancellation by exerting multiple rounds of co-channel interferences, various implementation ways can be used, e.g., a maximum possible way is used, as long as an analysis result obtained by exerting one round of the co-channel interference therein is superior to the preset threshold, it is determined that the mobile terminal has the supporting capability of single antenna interference suppression and cancellation; or, a strongest restriction principle way is used, that is, when analysis results obtained by exerting all rounds of co-channel interferences are superior to the preset threshold, it is determined that the mobile terminal has the supporting capability of single antenna interference suppression and cancellation.

In the second stage, modulation ways of the co-channel interference exerted by the base station subsystem can be various. For example, the co-channel interference is an interference signal with the same phase as a measured signal, and after performing Gaussian-Filtered Minimum Shift Keying (GMSK) modulation on a co-channel interference signal and the measured signal respectively, vector addition is performed on the two modulated signals to compose one downlink signal to be sent to the mobile terminal; or the co-channel interference is an interference signal whose phase is different from a phase of the measured signal by pie/2 (i.e. π/2), and after performing GMSK modulation on the co-channel interference signal and the measured signal respectively, vector addition is performed on the two modulated signals to compose one downlink signal to be sent to the mobile terminal; or the co-channel interference can be reflected as an adaptive Quadrature Phase Shift Keying (QPSK) modulation signal composed of the co-channel interference signal and the measured signal, and after directly performing adaptive QPSK modulation on the co-channel interference signal and the measured signal, the modulated downlink signal is sent to the mobile terminal. The adaptive QPSK modulation can use the related art in the existing documents, such as a method provided by the 3GPP TS 45.004. The co-channel interference signal and the measured signal uses different training sequences.

During the specific implementation of the above method, it can be that a BTS in the base station subsystem completes the process of actively acquiring the supporting capability of single antenna interference suppression and cancellation of the mobile terminal independently, and also can be that a BSC and BTS completes the process of actively acquiring the supporting capability of single antenna interference suppression and cancellation of the mobile terminal together. For example, the BTS can determine the mobile terminal on which the acquisition of the supporting capability of single antenna interference suppression and cancellation is required to be performed, and the BSC also can determine the mobile terminal on which the acquisition of the supporting capability of single antenna interference suppression and cancellation is required to be performed and then inform the BTS; the process of exerting one round or multiple rounds of co-channel interferences to the downlink frames in specific types of the mobile terminal with the supporting capability of single antenna interference suppression and cancellation to be tested can be completed by the BTS, the process of analyzing the received signal parameters in the measurement reports reported by the mobile terminal during the duration of exerting the co-channel interferences, and judging whether the mobile terminal has the supporting capability of single antenna interference suppression and cancellation can be completed by the BTS or BSC, and it also can be completed by the BTS and BSC together, for which no specific limitation is made in the present invention.

The present invention will be described in detail in combination with the accompanying drawings and specific examples below.

### Example 1

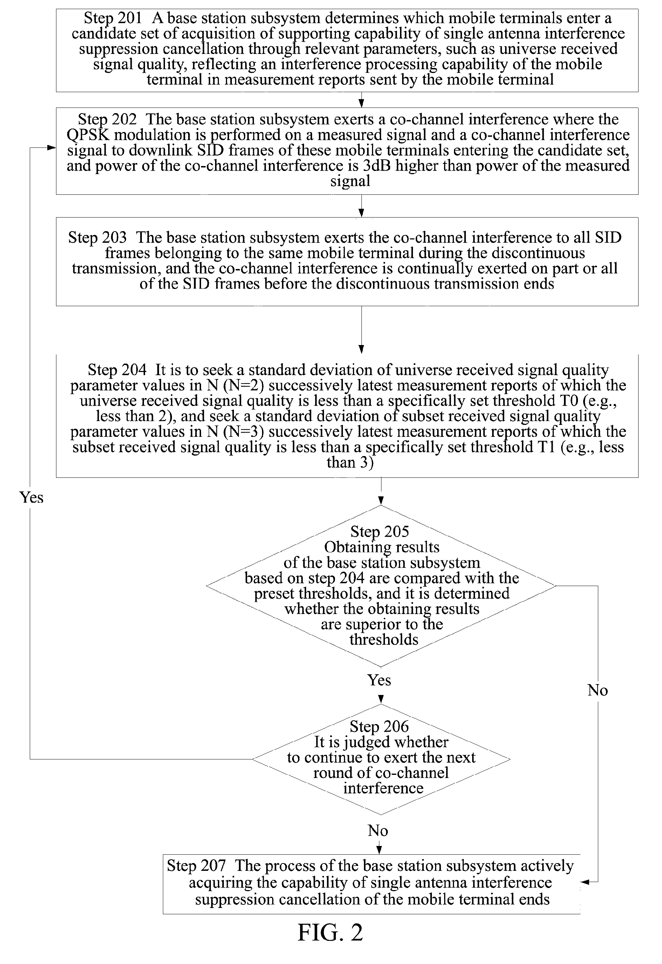

As shown in FIG. 2, when a mobile terminal is in a dedicated mode, during the discontinuous transmission, a base station subsystem actively acquiring capability of single antenna interference suppression and cancellation of the mobile terminal in the way of exerting co-channel interferences to an SID frame includes the following steps.

In step 201, the base station subsystem determines a mobile terminal on which the acquisition of supporting capability of single antenna interference suppression and cancellation is required to be performed through relevant parameters, such as universe received signal quality, reflecting an interference processing capability of the mobile terminal in measurement reports sent by the mobile terminal.

The base station subsystem can uses various ways, e.g., the mobile terminal can be determined through the relevant parameters, such as the universe received signal quality and universe received signal strength, reflecting the interference processing capability of the mobile terminal in the measurement reports sent by the mobile terminal; or the base station subsystem also can determine a certain mobile terminal or certain mobile terminals served by certain carrier frequencies or cells on which the acquisition of the supporting capability of single antenna interference suppression and cancellation is required to be performed based on the uplink measurement results; or the base station subsystem determines a certain mobile terminal or certain mobile terminals served by certain carrier frequencies or cells on which the acquisition of the supporting capability of single antenna interference suppression and cancellation is required to be performed based on the traffic load. In the example, the mobile terminal on which the acquisition of the supporting capability of single antenna interference suppression and cancellation is required to be performed is determined through the relevant parameters, such as the universe received signal quality, reflecting the interference processing capability of the mobile terminal in the measurement reports sent by the mobile terminal.

Step 201 is an optional step, the mobile terminal on which the acquisition of the supporting capability of single antenna interference suppression and cancellation is required to be performed can be a certain default mobile terminal or certain default mobile terminals.

In step 202, the base station subsystem exerts one co-channel interference, where the adaptive QPSK modulation is performed on a measured signal and a co-channel interference signal, to a downlink SID frame of the determined mobile terminal on which the acquisition of the supporting capability of single antenna interference suppression and cancellation is required to be performed.

Modulation ways of the co-channel interference exerted by the base station subsystem can be various, e.g., the co-channel interference is one interference signal which uses GMSK modulation and has the same phase as the measured signal, or is one GMSK modulation signal whose phase is different from a phase of the measured signal by pie/2, or can be reflected as one adaptive QPSK modulation signal composed of the co-channel interference signal and the measured signal. Power of the co-channel interference can be various, e.g., the power of the co-channel interference is equal to the power of the measured signal, or the power of the co-channel interference is 3dB higher than the power of the measured signal. In the example, it is used that the co-channel interference, where the adaptive QPSK modulation is performed on a measured signal and a co-channel interference signal, is exerted to the downlink SID frame of the mobile terminal, and the power of the co-channel interference is 3dB higher than the power of the measured signal.

In step 203, the base station subsystem exerts the co-channel interference to all SID frames belonging to the same mobile terminal during the discontinuous transmission, and the co-channel interference is continually exerted to part or all of the SID frames before the discontinuous transmission ends.

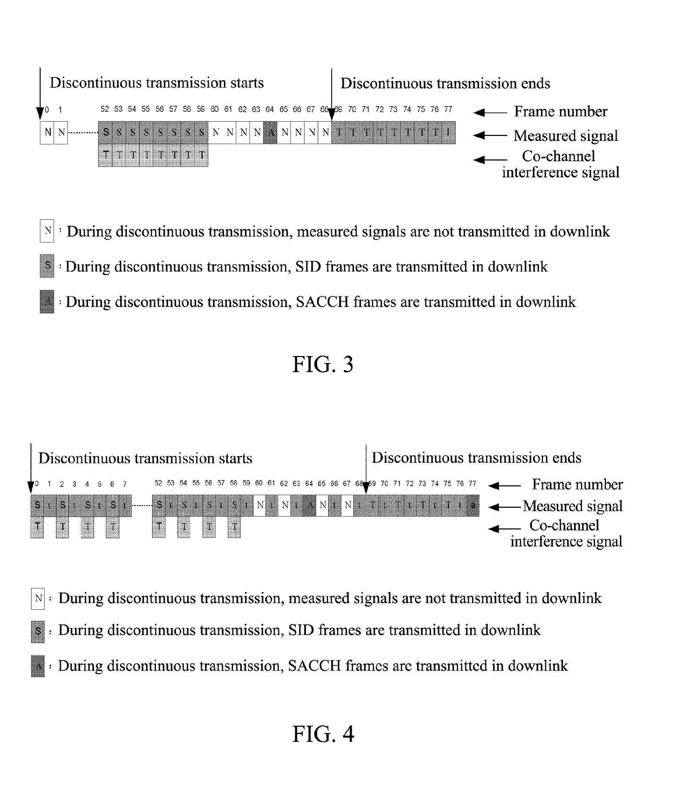

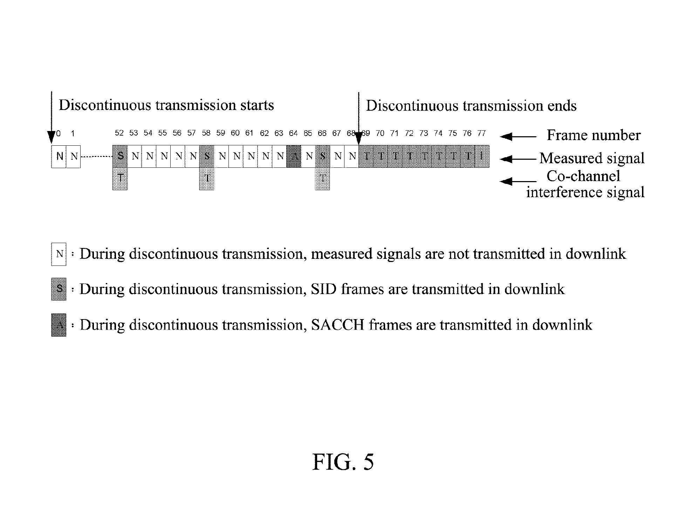

Specifically, with regard to full-rate speech coding, frame numbers, which are during the discontinuous transmission, modulo 104 can be performed, (i.e. frame number mod 104), and these frames with results of remainder being equal to (52, 53, 54, 55, 56, 57, 58, 59) are the SID frames, and the co-channel interference is exerted to all these SID frames, and the co-channel interference is continually exerted to part or all of the SID frames before the discontinuous transmission ends; with regard to half-rate speech coding, frame numbers, which are during the discontinuous transmission, modulo 104 can be performed, (i.e. frame number mod 104), these frames with results of remainder being equal to (0, 2, 4, 6, 52, 54, 56, 58) are SID frames of a mobile terminal located in a first sub-channel, the co-channel interference is exerted to all these SID frames, and the co-channel interference is continually exerted to part or all of the SID frames before the discontinuous transmission ends. With regard to adaptive multi-rate speech coding, since there is no fixed position for the frame numbers of the SID frames thereof, the co-channel interference is exerted to all the emerging SID frames, and the co-channel interference is continually exerted to part or all of the SID frames before the discontinuous transmission ends. In the example, it is used that the co-channel interference is exerted to all the SID frames of the mobile terminal before the discontinuous transmission ends. As shown in FIG. 3, it is a schematic diagram of the base station subsystem exerting the interference to the SID frames with regard to the full-rate speech coding, and as shown in FIG. 4, it is a schematic diagram of the base station subsystem exerting the interference to the SID frames with regard to the half-rate speech coding, and as shown in FIG. 5, it is a schematic diagram of the base station subsystem exerting the interference to the SID frames with regard to the adaptive multi-rate speech coding.

In step 204, the relevant parameters, such as the universe received signal quality, universe received signal strength, subset received signal quality and subset received signal strength and so on, in one or multiple measurement reports reported by the mobile terminal during the duration of exerting the co-channel interference are obtained.

There are various implementation methods according to specific application environments and implementation characteristics of the base station subsystem. For example, the method 1 is to separately seek an average value of universe received signal quality parameter values and subset received signal quality parameter values in N successively latest measurement reports; the method 2 is to seek a standard deviation of universe received signal quality parameter values in N successively latest measurement reports of which the universe received signal quality is less than a specifically set threshold T0 (e.g., less than 2), and to seek a standard deviation of subset received signal quality parameter values in N successively latest measurement reports of which the subset received signal quality is less than a specifically set threshold T1 (e.g., less than 3); the method 3 is to perform obtaining in combination with the universe received signal quality and universe received signal strength in downlink measurement reports together, for example, it is only to seek an average value of universe received signal quality parameter values in measurement reports containing the universe received signal strength less than a certain threshold T2; it is only to seek an average value of subset received signal quality parameter values in measurement reports containing the subset received signal strength less than a certain threshold T3. The method 4 is to perform obtaining in combination with the universe received signal quality, universe received signal strength, subset received signal quality and subset received signal strength in the downlink measurement reports together, for example, it is only to seek a standard deviation of universe received signal quality parameter values in measurement reports containing the universe received signal strength less than a certain threshold T4, and it is only to seek a standard deviation of subset received signal quality parameter values in measurement reports containing the subset received signal strength less than a certain threshold T5. With regard to two categories of parameter values such as universe received signal quality/universe received signal strength and subset received signal quality/subset received signal strength and so on, calculations are performed separately and independently. In the example, the method 2 is used, that is, it is to seek a standard deviation of universe received signal quality parameter values in N (N=2) successively latest measurement reports of which the universe received signal quality is less than the specifically set threshold T0 (e.g., less than 2), and to seek a standard deviation of subset received signal quality parameter values in N (N=3) successively latest measurement reports of which the subset received signal quality is less than the specifically set threshold T1 (e.g., less than 3).

In step 205, obtaining results of the base station subsystem based on step 204 are compared with the preset thresholds separately and independently based on the two categories of parameter values, universe received signal quality/universe received signal strength and subset received signal quality/subset received signal strength, and if the obtaining results of step 204 are superior to the preset thresholds, it is believed that interference suppression capability of the terminal is strong, and the terminal may be a mobile terminal supporting single antenna interference suppression and cancellation, otherwise it is believed that the terminal is not the mobile terminal supporting single antenna interference suppression and cancellation.

Specifically, the following methods can be used. In method 1, if the average value of the universe received signal quality parameter values in the N successively latest measurement reports is less than a specifically set threshold RQAVG11 (e.g., less than 3), and the average value of the subset received signal quality parameter values in the N successively latest measurement reports is less than a specifically set threshold RQAVG12 (e.g., less than 2), it is believed that the interference suppression capability of the terminal is strong, and the terminal may be the mobile terminal supporting the single antenna interference suppression and cancellation; in method 2, if the standard deviation of the universe received signal quality parameter values in the N successively latest measurement reports of which the universe received signal quality is less than the specifically set threshold T0 (e.g., less than 3) is less than a specifically set threshold RQCV11 (e.g., less than 0.05), and the standard deviation of the subset received signal quality parameter values in the N successively latest measurement reports of which the subset received signal quality is less than the specifically set threshold T1 (e.g., less than 2) is less than a specifically set threshold RQCV12 (e.g., less than 0.05), it is believed that the interference suppression capability of the terminal is strong, and the terminal may be the mobile terminal supporting the single antenna interference suppression and cancellation; or, in method 3, if the average value of the universe received signal quality parameter values in the measurement reports of which the universe received signal strength less than a certain threshold T2 (e.g., less than -65dBm) is less than a threshold RQAVG21 (e.g., less than 3), and the average value of the subset received signal quality parameter values in the measurement reports of which the subset received signal strength less than a certain threshold T3 (e.g., less than -65dBm) is less than a threshold RQAVG22 (e.g., less than 2), it is believed that the interference suppression capability of the terminal is strong, and the terminal may be the mobile terminal supporting the single antenna interference suppression and cancellation. Or, in method 4, if the standard deviation of the universe received signal quality parameter values in the measurement reports of which the universe received signal strength less than a certain threshold T4 (e.g., less than -65dBm) is less than a threshold RQCV21 (e.g., less than 0.05), and the standard deviation of the subset received signal quality parameter values in the measurement reports of which the subset received signal strength less than a certain threshold T5 (e.g., less than -65dBm) is less than a threshold RQCV22 (e.g., less than 0.05), it is believed that the interference suppression capability of the terminal is strong, and the terminal may be the mobile terminal supporting the single antenna interference suppression and cancellation.

In step 206, with regard to a judgment result that it may be the mobile terminal supporting the single antenna interference suppression and cancellation, the base station subsystem can have various processing ways. For example, in method 1, it is considered that the process of actively acquiring the capability of mobile terminal ends, and step 207 is executed; or, in method 2, the base station subsystem decides to continue to exert another round of co-channel interference based on the result, that is, it returns to execute step 202, and the power strength and lasting time of the exerted co-channel interference can also be set according to a policy of the base station subsystem, which can be equal to or different from corresponding settings of the previous round. Afterwards, the base station subsystem analyzes the relevant parameters, such as the received signal quality and received signal strength and so on, in one or multiple measurement reports reported by the mobile terminal during the duration of exerting this round of co-channel interference, for example, whether these parameters are superior to one set threshold, and the threshold can be equal to or different from corresponding settings of the previous round. By analogy, until the base station subsystem considers that the process of actively acquiring the capability of the mobile terminal ends, step 207 is executed.

The processing of multiple judgment results after exerting multiple rounds of co-channel interferences can have various implementation ways according to specific application environments and implementation characteristics of the base station subsystem. For example, a maximum possible way is used, in the judgment results after exerting all rounds of co-channel interferences, as long as it is considered from the result of at least one round that the mobile terminal has the capability of single antenna interference suppression and cancellation, it is believed that the mobile terminal has the capability of single antenna interference suppression and cancellation; or a strongest restriction principle way is used, in the judgment results after exerting all rounds of co-channel interferences, only when it is considered from the judgment result of each round that the mobile terminal has the capability of single antenna interference suppression and cancellation, it is believed that the mobile terminal has the capability of single antenna interference suppression and cancellation.

With regard to a judgment result that it is not the mobile terminal supporting the single antenna interference suppression and cancellation, the base station subsystem considers that the process of actively acquiring the capability of the mobile terminal ends, and step 207 is executed.

In step 207, the process of the base station subsystem actively acquiring the capability of single antenna interference suppression and cancellation of the mobile terminal ends.

### Example 2

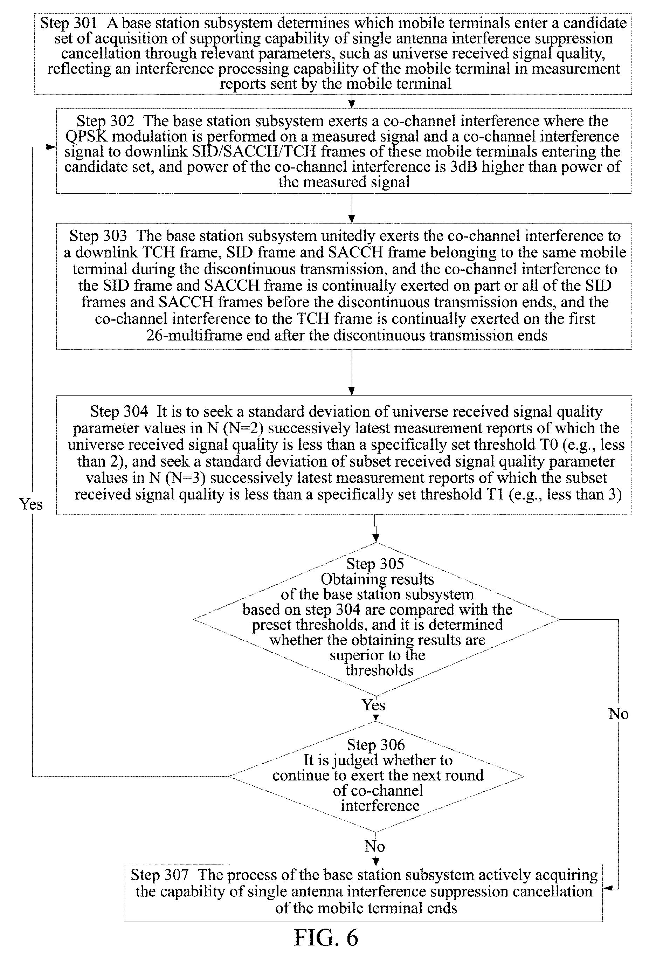

As shown in FIG. 6, when a mobile terminal is in a dedicated mode, during the discontinuous transmission, a base station subsystem actively acquiring the capability of single antenna interference suppression and cancellation of the mobile terminal in the way of exerting the co-channel interference to a downlink speech frame, an SID frame and an SACCH frame unitedly includes the following steps.

In step 301, the base station subsystem determines a mobile terminal on which the acquisition of the supporting capability of single antenna interference suppression and cancellation is required to be performed through relevant parameters, such as universe received signal quality, reflecting an interference processing capability of the mobile terminal in measurement reports sent by the mobile terminal.

The base station subsystem can uses various ways, e.g., the mobile terminal can be determined through the relevant parameters, such as the universe received signal quality and universe received signal strength, reflecting the interference processing capability of the mobile terminal in the measurement reports sent by the mobile terminal; or the base station subsystem also can determine that a certain mobile terminal or certain mobile terminals served by certain carrier frequencies or cells on which the acquisition of the supporting capability of single antenna interference suppression and cancellation is required to be performed based on the uplink measurement results; or the base station subsystem determines that a certain mobile terminal or certain mobile terminals served by certain carrier frequencies or cells on which the acquisition of the supporting capability of single antenna interference suppression and cancellation is required to be performed based on the traffic load. In the example, the mobile terminal on which the acquisition of the supporting capability of single antenna interference suppression and cancellation is required to be performed is determined through the relevant parameters, such as the universe received signal quality, reflecting the interference processing capability of the mobile terminal in the measurement reports sent by the mobile terminal.

Step 301 is an optional step, the mobile terminal on which the acquisition of the supporting capability of single antenna interference suppression and cancellation is required to be performed can be a certain default mobile terminal or certain default mobile terminals.

In step 302, since there is uncertainty in ending time of the process of discontinuous transmission, the following situation exists in a 26-multiframe period: part of frames therein are frames during the discontinuous transmission (including the SID frame and SACCH frame), and part of frames are speech frames after the discontinuous transmission ends (i.e. a TCH frame). With regard to this situation, the base station subsystem unitedly exerts a co-channel interference, where the adaptive QPSK modulation is performed on a measured signal and a co-channel interference signal, to the downlink speech frame, SID frame and SACCH frame of the determined mobile terminal on which the acquisition of supporting capability of single antenna interference suppression and cancellation is required to be performed. Modulation ways of the co-channel interference exerted by the base station subsystem can be various, e.g., the co-channel interference is one interference signal which uses GMSK modulation and has the same phase as the measured signal, or is one GMSK modulation signal whose phase is different from a phase of the measured signal by pie/2, or it can be reflected as one adaptive QPSK modulation signal composed of the co-channel interference signal and the measured signal. Power of the co-channel interference can be various, e.g., the power of the co-channel interference is equal to the power of the measured signal, or the power of the co-channel interference is 3dB higher than the power of the measured signal. In the example, it is used that the co-channel interference, where the adaptive QPSK modulation is performed on a measured signal and a co-channel interference signal, is exerted to the downlink speech frame, SID frame and SACCH frame of the mobile terminal unitedly, and the power of the co-channel interference is 3dB higher than the power of the measured signal.

In step 303, the base station subsystem unitedly exerts the co-channel interference to a downlink speech frame, SID frame and SACCH frame belonging to the same mobile terminal during the discontinuous transmission, and the co-channel interference to the SID frame and SACCH frame is continually exerted to part or all of SID frames and SACCH frames before the discontinuous transmission ends, and the co-channel interference to the speech frame is continually exerted to a first 26-multiframe end after the discontinuous transmission ends.

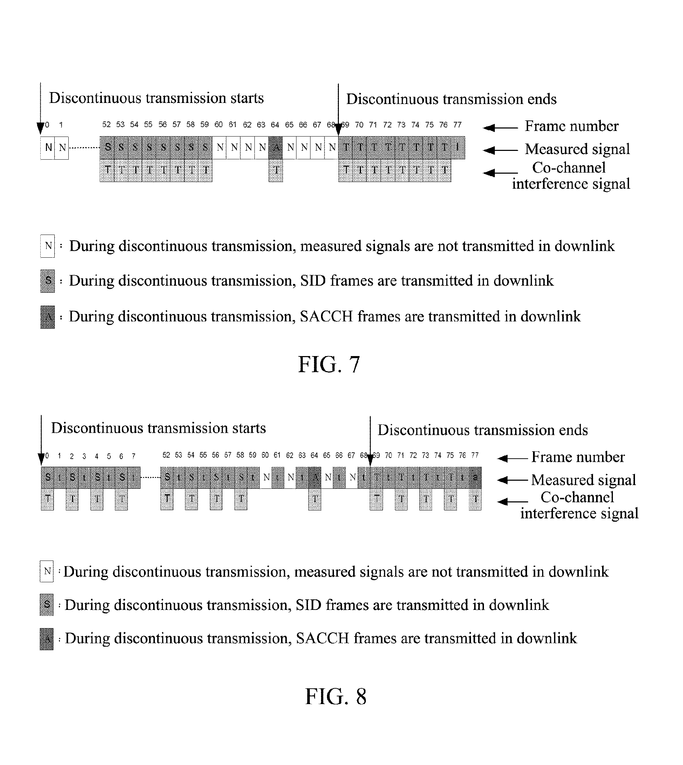

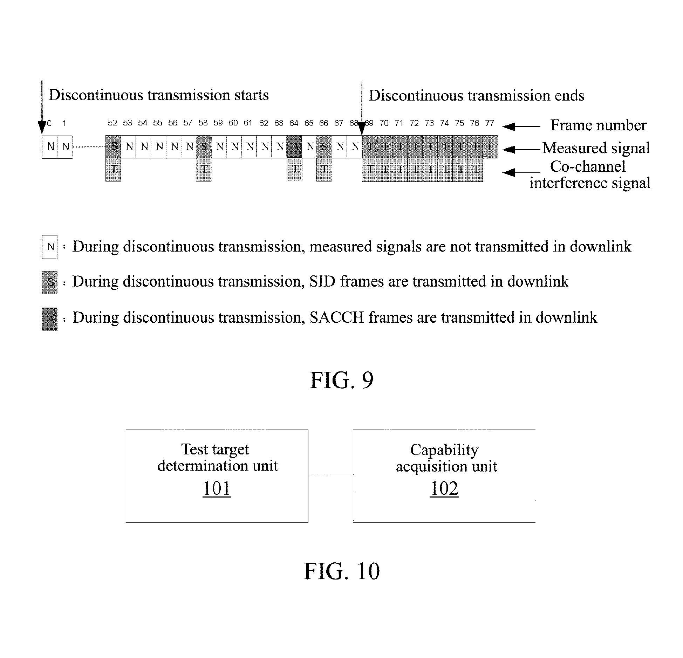

Specifically, with regard to full-rate speech coding, frame numbers, which are during the discontinuous transmission, modulo 104 can be performed, (i.e. frame number mod 104), and these frames with results of remainder being equal to (52, 53, 54, 55, 56, 57, 58, 59) are the SID frames, and the co-channel interference is exerted to all these SID frames, and the co-channel interference is continually exerted to part or all of the SID frames before the discontinuous transmission ends; the co-channel interference to the SACCH frame is exerted at positions of the SACCH frames. The co-channel interference to the speech frame is continually exerted on the first 26-multiframe end after the discontinuous transmission ends. With regard to half-rate speech coding, frame numbers, which are during the discontinuous transmission, modulo 104 can be performed, (i.e. frame number mod 104), and these frames with results of remainder being equal to (0, 2, 4, 6, 52, 54, 56, 58) are SID frames of a mobile terminal located in a first sub-channel, and the co-channel interference is exerted to all these SID frames, and the co-channel interference is continually exerted on part or all of the SID frames before the discontinuous transmission ends, and the co-channel interference to the SACCH frame is exerted at positions of the SACCH frames. The co-channel interference to the speech frame is continually exerted on the first 26-multiframe end after the discontinuous transmission ends. With regard to adaptive multi-rate speech coding, since there is no fixed position for the frame numbers of SID frames thereof, the co-channel interference is exerted to all the emerging SID frames, and the co-channel interference is continually exerted on part or all of the SID frames before the discontinuous transmission ends; the co-channel interference to the SACCH frame is exerted at positions of the SACCH frames. The co-channel interference to the speech frame is continually exerted on the first 26-multiframe end after the discontinuous transmission ends. In the example, it is used that the co-channel interference is exerted to all the SID frames of the mobile terminal before the discontinuous transmission ends, the co-channel interference to the SACCH frame is exerted at positions of the SACCH frames, and the co-channel interference to the speech frame is continually exerted on all speech frames of a first 26-multiframe after the discontinuous transmission ends. As shown in FIG. 7, it is a schematic diagram of the base station subsystem exerting the interference with regard to the full-rate speech coding, and as shown in FIG. 8, it is a schematic diagram of the base station subsystem exerting the interference with regard to the half-rate speech coding, and as shown in FIG. 9, it is a schematic diagram of the base station subsystem exerting the interference with regard to the adaptive multi-rate speech coding.

In step 304, the relevant parameters, such as the universe received signal quality, universe received signal strength, subset received signal quality and subset received signal strength and so on, in one or multiple measurement reports reported by the mobile terminal during the duration of exerting the co-channel interference are obtained.

There are various implementation ways according to specific application environments and implementation characteristics of the base station subsystem. For example, the method 1 is to separately seek an average value of universe received signal quality parameter values and subset received signal quality parameter values in N successively latest measurement reports; the method 2 is to seek a standard deviation of universe received signal quality parameter values in N successively latest measurement reports of which the universe received signal quality is less than a specifically set threshold T6 (e.g., less than 2); and to seek a standard deviation of subset received signal quality parameter values in N successively latest measurement reports of which the subset received signal quality is less than a specifically set threshold T7 (e.g., less than 3); the method 3 is to perform obtaining in combination with the universe received signal quality and universe received signal strength in downlink measurement reports together, for example, it is only to seek an average value of universe received signal quality parameter values in measurement reports containing the universe received signal strength less than a certain threshold T8; it is only to seek an average value of subset received signal quality parameter values in measurement reports containing the subset received signal strength less than a certain threshold T9. The method 4 is to perform obtaining in combination with the universe received signal quality, universe received signal strength, subset received signal quality and subset received signal strength in the downlink measurement reports together, for example, it is only to seek a standard deviation of universe received signal quality parameter values in measurement reports containing the universe received signal strength less than a certain threshold T10, and only to seek a standard deviation of subset received signal quality parameter values in measurement reports containing the subset received signal strength less than a certain threshold T11. With regard to two categories of parameter values, such as universe received signal quality/universe received signal strength and subset received signal quality/subset received signal strength and so on, calculations are performed separately and independently. In the example, the method 2 is used, that is, it is to seek a standard deviation of universe received signal quality parameter values in N (N=2) successively latest measurement reports of which the universe received signal quality is less than the specifically set threshold T6 (e.g., less than 2), and to seek a standard deviation of subset received signal quality parameter values in N (N=3) successively latest measurement reports of which the subset received signal quality is less than the specifically set threshold T7 (e.g., less than 3).

In step 305, obtaining results of the base station subsystem based on step 304 are compared with the preset thresholds separately and independently based on the two categories of parameter values, universe received signal quality/universe received signal strength and subset received signal quality/subset received signal strength, and if the obtaining results of step 304 are superior to the preset thresholds, it is believed that interference suppression capability of the terminal is strong, and the terminal may be a mobile terminal supporting single antenna interference suppression and cancellation, otherwise it is believed that the terminal is not the mobile terminal supporting single antenna interference suppression and cancellation.

Specifically, the following methods can be used. In method 1, if the average value of the universe received signal quality parameter values in the N successively latest measurement reports is less than a specifically set threshold RQAVG31 (e.g., less than 3), and the average value of the subset received signal quality parameter values in the N successively latest measurement reports is less than a specifically set threshold RQAVG32 (e.g., less than 2), it is believed that the interference suppression capability of the terminal is strong, and the terminal may be the mobile terminal supporting the single antenna interference suppression and cancellation; in method 2, if the standard deviation of the universe received signal quality parameter values in the N successively latest measurement reports of which the universe received signal quality is less than the specifically set threshold T0 (e.g., less than 3) is less than a specifically set threshold RQCV31 (e.g., less than 0.05), and the standard deviation of the subset received signal quality parameter values in the N successively latest measurement reports of which the subset received signal quality is less than the specifically set threshold T1 (e.g., less than 2) is less than a specifically set threshold RQCV32 (e.g., less than 0.05), it is believed that the interference suppression capability of the terminal is strong, and the terminal may be the mobile terminal supporting the single antenna interference suppression and cancellation; or, in method 3, if the average value of the universe received signal quality parameter values in the measurement reports of which the universe received signal strength less than a certain threshold T2 (e.g., less than -65dBm) is less than a threshold RQAVG41 (e.g., less than 3), and the average value of the subset received signal quality parameter values in the measurement reports of which the subset received signal strength less than a certain threshold T3 (e.g., less than -65dBm) is less than a threshold RQAVG42 (e.g., less than 2), it is believed that the interference suppression capability of the terminal is strong, and the terminal may be the mobile terminal supporting the single antenna interference suppression and cancellation. Or, in method 4, if the standard deviation of the universe received signal quality parameter values in the measurement reports of which the universe received signal strength less than a certain threshold T4 (e.g., less than -65dBm) is less than a threshold RQCV41 (e.g., less than 0.05), and the standard deviation of the subset received signal quality parameter values in the measurement reports of which the subset received signal strength less than a certain threshold T5 (e.g., less than -65dBm) is less than a threshold RQCV42 (e.g., less than 0.05), it is believed that the interference suppression capability of the terminal is strong, and the terminal may be the mobile terminal supporting the single antenna interference suppression and cancellation.

In step 306, with regard to a judgment result that it may be the mobile terminal supporting the single antenna interference suppression and cancellation, the base station subsystem can have various processing ways. For example, in method 1, it is considered that the process of actively acquiring capability of the mobile terminal ends, and step 307 is executed; or, in method 2, the base station subsystem decides to continue to exert another round of co-channel interference based on the result, and it returns to execute step 302, and the power strength and lasting time of the exerted co-channel interference can also be set according to a policy of the base station subsystem, which can be equal to or different from corresponding settings of the previous round. Afterwards, the base station subsystem analyzes the relevant parameters, such as the received signal quality and received signal strength and so on, in one or multiple measurement reports reported by the mobile terminal during the duration of exerting this round of co-channel interference, for example, whether these parameters are superior to one set threshold, and the threshold can be equal to or different from corresponding settings of the previous round. By analogy, until the base station subsystem considers that the process of actively acquiring the capability of the mobile terminal ends, step 307 is executed.

The processing of multiple judgment results after exerting multiple rounds of co-channel interferences can have various implementation ways according to specific application environments and implementation characteristics of the base station subsystem. For example, a maximum possible way is used, in the judgment results after exerting all rounds of co-channel interferences, as long as it is considered from the result of at least one round that the mobile terminal has the capability of single antenna interference suppression and cancellation, it is believed that the mobile terminal has the capability of single antenna interference suppression and cancellation; or a strongest restriction principle way is used, in the judgment results after exerting all rounds of co-channel interferences, only when it is considered from the judgment result of each round that the mobile terminal has the capability of single antenna interference suppression and cancellation, it is believed that the mobile terminal has the capability of single antenna interference suppression and cancellation.

With regard to a judgment result that it is not the mobile terminal supporting the single antenna interference suppression and cancellation, the base station subsystem considers that the process of actively acquiring the capability of the mobile terminal ends, and step 307 is executed.

In step 307, the process of the base station subsystem actively acquiring the capability of single antenna interference suppression and cancellation of the mobile terminal ends.

A device for acquiring capability of the mobile terminal according to the example of the present invention is as shown in FIG. 10, which can be applied to a base station subsystem and includes a test target determination unit 101 and a capability acquisition unit 102, wherein:
the test target determination unit 101 is configured to: determine a mobile terminal with supporting capability of single antenna interference suppression and cancellation to be tested, and inform the capability acquisition unit 102;
the capability acquisition unit 102 is configured to: exert one round or multiple rounds of co-channel interferences to an SID frame of the mobile terminal with the supporting capability of single antenna interference suppression and cancellation to be tested, or exert one round or multiple rounds of co-channel interferences to the SID frame of the mobile terminal with the supporting capability of single antenna interference suppression and cancellation to be tested and other downlink frames in specific types, analyze received signal parameters in measurement reports reported by the mobile terminal during the duration of exerting the co-channel interferences, and judge whether the mobile terminal has the supporting capability of single antenna interference suppression and cancellation.

The test target determination unit 101 is an optional module, and a certain default terminal or certain default terminals can be set as the mobile terminal with the supporting capability of single antenna interference suppression and cancellation to be tested in the capability acquisition unit 102.

Preferably, the test target determination unit 101 is configured to: determine the mobile terminal with the supporting capability of single antenna interference suppression and cancellation to be tested according to one or multiple kinds of the following information, and inform the capability acquisition unit of: (1) parameters reflecting an interference processing capability of the mobile terminal in the measurement reports sent by the mobile terminal; (2) uplink measurement results; (3) traffic load.

Preferably, the other downlink frames in specific types include a Tone Channel (TCH) frame and/or a Slow Associated Control Channel (SACCH) frame.

Preferably, the capability acquisition unit 102 is configured to: after performing Gaussian-Filtered Minimum Shift Keying (GMSK) modulation on a co-channel interference signal and a measured signal respectively, perform vector addition on a modulated co-channel interference signal and a modulated tested signal to compose one downlink signal to be sent to the mobile terminal, and the co-channel interference signal is an interference signal with the same phase as the measured signal, or is an interference signal whose phase is different from a phase of the measured signal by π/2; or, after directly performing adaptive Quadrature Phase Shift Keying (QPSK) modulation on the co-channel interference signal and the measured signal, send a modulated downlink signal to the mobile terminal.

Preferably, the capability acquisition unit 102 is configured to: exert one round of co-channel interference to the SID frame of the mobile terminal with the supporting capability of single antenna interference suppression and cancellation to be tested, analyze the received signal parameters in the measurement reports reported by the mobile terminal during the duration of exerting the co-channel interference, and determine whether to continue to exert the co-channel interference based on analysis results, if it is determined to continue to exert the co-channel interference, continue to exert the co-channel interference to the SID frame of the mobile terminal until determining whether the mobile terminal has the supporting capability of single antenna interference suppression and cancellation; or, to exert one round of co-channel interference to the SID frame of the mobile terminal with the supporting capability of single antenna interference suppression and cancellation to be tested and the other downlink frames in specific types, analyze the received signal parameters in the measurement reports reported by the mobile terminal during the duration of exerting the co-channel interference, and determine whether to continue to exert the co-channel interference based on the analysis results, and if it is determined to continue to exert the co-channel interference, continue to exert the co-channel interference to the SID frame of the mobile terminal and the other downlink frames in specific types until determining whether the mobile terminal has the supporting capability of single antenna interference suppression and cancellation.

Preferably, the capability acquisition unit 102 is configured to: after exerting one round of co-channel interference, when an analysis result obtained by exerting the co-channel interference is superior to a preset threshold, determine that the mobile terminal has the supporting capability of single antenna interference suppression and cancellation; or, after exerting multiple rounds of co-channel interferences, if an analysis result obtained by exerting at least one round of co-channel interference therein is superior to the preset threshold, determine that the mobile terminal has the supporting capability of single antenna interference suppression and cancellation; or, after exerting multiple rounds of co-channel interferences, if analysis results obtained by exerting all rounds of the co-channel interferences are superior to the preset threshold, determine that the mobile terminal has the supporting capability of single antenna interference suppression and cancellation.

Preferably, the received signal parameters include universal received signal quality parameters and subset received signal quality parameters; or, the received signal parameters comprise the universe received signal quality parameters, universe received signal strength parameters, the subset received signal quality parameters and subset received signal strength parameters;
the capability acquisition unit 102 is configured to: when analyzing the received signal parameters in the measurement reports reported by the mobile terminal during the duration of exerting the co-channel interferences, seek an average value of universe received signal quality parameter values in N successively latest measurement reports, and judge whether an obtained result is less than a first result threshold, and seek an average value of subset received signal quality parameter values in the N successively latest measurement reports, and judge whether an obtained result is less than a second result threshold; or, seek a standard deviation of received signal quality parameter values in the N successively latest measurement reports of which the universe received signal quality parameter values are less than a first condition threshold, and judge whether an obtained result is less than a third result threshold, and seek a standard deviation of received signal quality parameter values in the N successively latest measurement reports of which the subset received signal quality parameter values are less than a second condition threshold, and judge whether an obtained result is less than a fourth result threshold; or, seek an average value of universe received signal quality parameter values in measurement reports containing universe received signal strength parameter values less than a third condition threshold, and judge whether an obtained result is less than a fifth result threshold, and seek an average value of subset received signal quality parameter values in measurement reports containing subset received signal strength parameter values less than a fourth condition threshold, and judge whether an obtained result is less than a sixth result threshold; or, seek a standard deviation of universe received signal quality parameter values in measurement reports containing universe received signal strength parameter values less than a fifth condition threshold, and judge whether an obtained result is less than a seventh result threshold, and seek a standard deviation of subset received signal quality parameter values in measurement reports containing subset received signal strength parameter values less than a sixth condition threshold, and judge whether an obtained result is less than an eighth result threshold; wherein, N is an integer.

The above device for acquiring the capability of the mobile terminal can be totally located in a BTS, and also can be partly located in the BTS and partly located in a BSC (e.g., the test target determination unit 101 is located in the BSC, and the capability acquisition unit 102 is located in the BTS; or the test target determination unit 101 is located in the BSC, and the capability acquisition unit 102 is partly located in the BTS and partly located in the BSC), various implementation ways can be specifically included, for which no specific limitation is made in the present invention.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

Though the present invention makes the descriptions in combination with the specific examples, modifications and changes can be made without departing from the spirit or scope of the present invention for the person skilled in the art. These modifications and changes are regarded as within the scope of the present invention and the scope of the appended claims.

### Industrial Applicability

A method and device for a base station subsystem acquiring capability of a mobile terminal are provided in the present invention, which can actively detect the supporting capability of single antenna interference suppression and cancellation of the mobile terminal in the condition that the mobile terminal does not report the supporting capability of single antenna interference suppression and cancellation during the discontinuous transmission, thereby being able to utilize a single antenna interference suppression and cancellation technique effectively, and enabling a GSM network to still obtain an excellent whole network performance in the environment of interference limitation.

## Claims

1. A method for a base station subsystem acquiring capability of a mobile terminal, comprising:
the base station subsystem exerting one round or multiple rounds of co-channel interferences to a Silence Insertion Description, SID, frame of a mobile terminal with a supporting capability of single antenna interference suppression and cancellation to be tested, analyzing received signal parameters in measurement reports reported by the mobile terminal during a duration of exerting the co-channel interferences, and judging whether the mobile terminal has the supporting capability of single antenna interference suppression and cancellation; or,
the base station subsystem exerting one round or multiple rounds of co-channel interferences to the SID frame of the mobile terminal with the supporting capability of single antenna interference suppression and cancellation to be tested and other downlink frames in specific types, analyzing the received signal parameters in the measurement reports reported by the mobile terminal during the duration of exerting the co-channel interferences, and judging whether the mobile terminal has the supporting capability of single antenna interference suppression and cancellation.

2. The method according to claim 1, wherein:
before exerting one round or multiple rounds of co-channel interferences, the method further comprises:
the base station subsystem determining the mobile terminal with the supporting capability of single antenna interference suppression and cancellation to be tested;
wherein, the base station subsystem determines the mobile terminal with the supporting capability of single antenna interference suppression and cancellation to be tested according to one or multiple kinds of following information:
(i) parameters reflecting an interference processing capability of the mobile terminal in the measurement reports sent by the mobile terminal;
(ii) uplink measurement results;
(iii) traffic load.

3. The method according to claim 1, wherein:
the other downlink frames in specific types comprise a Tone Channel, TCH, frame and/or a Slow Associated Control Channel, SACCH, frame.

4. The method according to claim 1, wherein:
in the step of exerting one round or multiple rounds of co-channel interferences,
after performing Gaussian-Filtered Minimum Shift Keying, GMSK, modulation on a co-channel interference signal and a measured signal respectively, the base station subsystem performs vector addition on a modulated co-channel interference signal and a modulated measured signal to compose one downlink signal and send the downlink signal to the mobile terminal; the co-channel interference signal is an interference signal with the same phase as the measured signal, or is an interference signal whose phase is different from a phase of the measured signal by π/2; or,
after directly performing adaptive Quadrature Phase Shift Keying, QPSK, modulation on the co-channel interference signal with the measured signal, the base station subsystem sends a modulated downlink signal to the mobile terminal.

5. The method according to claim 1, wherein:
the step of the base station subsystem exerting one round or multiple rounds of co-channel interferences to an SID frame of a mobile terminal with a supporting capability of single antenna interference suppression and cancellation to be tested, analyzing received signal parameters in measurement reports reported by the mobile terminal during a duration of exerting the co-channel interferences, and judging whether the mobile terminal has the supporting capability of single antenna interference suppression and cancellation comprises: the base station subsystem exerting one round of co-channel interference to the SID frame of the mobile terminal with the supporting capability of single antenna interference suppression and cancellation to be tested, analyzing the received signal parameters in the measurement reports reported by the mobile terminal during the duration of exerting the co-channel interference, and determining whether to continue to exert the co-channel interference based on an analysis result, if determining to continue to exert the co-channel interference, continuing to exert the co-channel interference to the SID frame of the mobile terminal until determining whether the mobile terminal has the supporting capability of single antenna interference suppression and cancellation;
the step of the base station subsystem exerting one round or multiple rounds of co-channel interferences to the SID frame of the mobile terminal with the supporting capability of single antenna interference suppression and cancellation to be tested and other downlink frames in specific types, analyzing the received signal parameters in the measurement reports reported by the mobile terminal during the duration of exerting the co-channel interferences, and judging whether the mobile terminal has the supporting capability of single antenna interference suppression and cancellation comprises: the base station subsystem exerting one round of co-channel interference to the SID frame of the mobile terminal with the supporting capability of single antenna interference suppression and cancellation to be tested and the other downlink frames in specific types, analyzing the received signal parameters in the measurement reports reported by the mobile terminal during the duration of exerting the co-channel interference, and determining whether to continue to exert the co-channel interference based on the analysis result, if determining to continue to exert the co-channel interference, continuing to exert the co-channel interference to the SID frame of the mobile terminal and the other downlink frames in specific types until determining whether the mobile terminal has the supporting capability of single antenna interference suppression and cancellation.

6. The method according to any one of claims 1 to 5, wherein:
in the step of the base station subsystem exerting one round of co-channel interference, analyzing the received signal parameters in the measurement reports reported by the mobile terminal during the duration of exerting the co-channel interference, and judging whether the mobile terminal has the supporting capability of single antenna interference suppression and cancellation,
when an analysis result obtained by exerting the co-channel interference is superior to a preset threshold, the base station subsystem determines that the mobile terminal has the supporting capability of single antenna interference suppression and cancellation.

7. The method according to any one of claims 1 to 5, wherein:
in the step of the base station subsystem exerting multiple rounds of co-channel interferences, analyzing the received signal parameters in the measurement reports reported by the mobile terminal during the duration of exerting the co-channel interferences, and judging whether the mobile terminal has the supporting capability of single antenna interference suppression and cancellation,
if an analysis result obtained by exerting one round of the co-channel interference therein is superior to a preset threshold, the base station subsystem determines that the mobile terminal has the supporting capability of single antenna interference suppression and cancellation; or,
if analysis results obtained by exerting all rounds of the co-channel interferences are superior to the preset threshold, the base station subsystem determines that the mobile terminal has the supporting capability of single antenna interference suppression and cancellation.

8. The method according to any one of claims 1 to 5, wherein:
the received signal parameters comprise universe received signal quality parameters and subset received signal quality parameters; or, the received signal parameters comprise universe received signal quality parameters, universe received signal strength parameters, subset received signal quality parameters and subset received signal strength parameters;
the step of analyzing the received signal parameters in the measurement reports reported by the mobile terminal during the duration of exerting the co-channel interferences comprises:
seeking an average value of universe received signal quality parameter values in N successively latest measurement reports, and judging whether an obtained result is less than a first result threshold, and seeking an average value of subset received signal quality parameter values in the N successively latest measurement reports, and judging whether an obtained result is less than a second result threshold; or,
seeking a standard deviation of received signal quality parameter values in N successively latest measurement reports of which the universe received signal quality parameter values are less than a first condition threshold, and judging whether an obtained result is less than a third result threshold, and seeking a standard deviation of received signal quality parameter values in N successively latest measurement reports of which the subset received signal quality parameter values are less than a second condition threshold, and judging whether an obtained result is less than a fourth result threshold; or,
seeking an average value of universe received signal quality parameter values in measurement reports containing universe received signal strength parameter values less than a third condition threshold, and judging whether an obtained result is less than a fifth result threshold, and seeking an average value of subset received signal quality parameter values in measurement reports containing subset received signal strength parameter values less than a fourth condition threshold, and judging whether an obtained result is less than a sixth result threshold; or,
seeking a standard deviation of universe received signal quality parameter values in measurement reports containing universe received signal strength parameter values less than a fifth condition threshold, and judging whether an obtained result is less than a seventh result threshold, and seeking a standard deviation of subset received signal quality parameter values in measurement reports containing subset received signal strength parameter values less than a sixth condition threshold, and judging whether an obtained result is less than an eighth result threshold;
wherein, N is an integer.

9. A device for acquiring capability of a mobile terminal, comprising a capability acquisition unit, wherein:
the capability acquisition unit is configured to: exert one round or multiple rounds of co-channel interferences to a Silence Insertion Description (SID) frame of a mobile terminal with a supporting capability of single antenna interference suppression and cancellation to be tested, or exert one round or multiple rounds of co-channel interferences to the SID frame of the mobile terminal with the supporting capability of single antenna interference suppression and cancellation to be tested and other downlink frames in specific types, analyze received signal parameters in measurement reports reported by the mobile terminal during a duration of exerting the co-channel interferences, and judge whether the mobile terminal has the supporting capability of single antenna interference suppression and cancellation.

10. The device according to claim 9, further comprising a test target determination unit, wherein:
the test target determination unit is configured to: determine the mobile terminal with the supporting capability of single antenna interference suppression and cancellation to be tested according to one or multiple kinds of following information, and inform the capability acquisition unit: (i) parameters reflecting an interference processing capability of the mobile terminal in the measurement reports sent by the mobile terminal; (ii) uplink measurement results; (iii) traffic load.

11. The device according to claim 9, wherein:
the other downlink frames in specific types comprise a Tone Channel, TCH, frame and/or a Slow Associated Control Channel, SACCH, frame.

12. The device according to claim 9, wherein:
the capability acquisition unit is configured to: after performing Gaussian-Filtered Minimum Shift Keying, GMSK, modulation on a co-channel interference signal and a measured signal respectively, perform vector addition on a modulated co-channel interference signal and a modulated measured signal to compose one downlink signal and send the downlink signal to the mobile terminal, and the co-channel interference signal is an interference signal with the same phase as the measured signal, or is an interference signal whose phase is different from a phase of the measured signal by π/2; or, after directly performing adaptive Quadrature Phase Shift Keying, QPSK, modulation on the co-channel interference signal and the measured signal, send a modulated downlink signal to the mobile terminal.

13. The device according to claim 9, wherein:
the capability acquisition unit is configured to: exert one round of co-channel interference to the SID frame of the mobile terminal with the supporting capability of single antenna interference suppression and cancellation to be tested, analyze the received signal parameters in the measurement reports reported by the mobile terminal during the duration of exerting the co-channel interference, and determine whether to continue to exert the co-channel interference based on an analysis result, if determining to continue to exert the co-channel interference, continue to exert the co-channel interference to the SID frame of the mobile terminal until determining whether the mobile terminal has the supporting capability of single antenna interference suppression and cancellation; or, to exert one round of co-channel interference to the SID frame of the mobile terminal with the supporting capability of single antenna interference suppression and cancellation to be tested and the other downlink frames in specific types, analyze the received signal parameters in the measurement reports reported by the mobile terminal during the duration of exerting the co-channel interference, and determine whether to continue to exert the co-channel interference based on the analysis result, and if determining to continue to exert the co-channel interference, continue to exert the co-channel interference to the SID frame of the mobile terminal and the other downlink frames in specific types until determining whether the mobile terminal has the supporting capability of single antenna interference suppression and cancellation.

14. The device according to any one of claims 9 to 13, wherein:
the capability acquisition unit is configured to: after exerting one round of co-channel interference, when an analysis result obtained by exerting the co-channel interference is superior to a preset threshold, determine that the mobile terminal has the supporting capability of single antenna interference suppression and cancellation; or, after exerting multiple rounds of co-channel interferences, if an analysis result obtained by exerting one round of the co-channel interference therein is superior to the preset threshold, determine that the mobile terminal has the supporting capability of single antenna interference suppression and cancellation; or, after exerting multiple rounds of co-channel interferences, if analysis results obtained by exerting all rounds of the co-channel interferences are superior to the preset threshold, determine that the mobile terminal has the supporting capability of single antenna interference suppression and cancellation.

15. The device according to any one of claims 9 to 13, wherein:
the received signal parameters comprise universal received signal quality parameters and subset received signal quality parameters; or, the received signal parameters comprise universe received signal quality parameters, universe received signal strength parameters, subset received signal quality parameters and subset received signal strength parameters;
the capability acquisition unit is configured to: when analyzing the received signal parameters in the measurement reports reported by the mobile terminal during the duration of exerting the co-channel interferences, seek an average value of universe received signal quality parameter values in N successively latest measurement reports, and judge whether an obtained result is less than a first result threshold, and seek an average value of subset received signal quality parameter values in the N successively latest measurement reports, and judge whether an obtained result is less than a second result threshold; or, seek a standard deviation of received signal quality parameter values in the N successively latest measurement reports of which the universe received signal quality parameter values are less than a first condition threshold, and judge whether an obtained result is less than a third result threshold, and seek a standard deviation of received signal quality parameter values in N successively latest measurement reports of which the subset received signal quality parameter values are less than a second condition threshold, and judge whether an obtained result is less than a fourth result threshold; or, seek an average value of universe received signal quality parameter values in measurement reports containing universe received signal strength parameter values less than a third condition threshold, and judge whether an obtained result is less than a fifth result threshold, and seek an average value of subset received signal quality parameter values in measurement reports containing subset received signal strength parameter values less than a fourth condition threshold, and judge whether an obtained result is less than a sixth result threshold; or, seek a standard deviation of universe received signal quality parameter values in measurement reports containing universe received signal strength parameter values less than a fifth condition threshold, and judge whether an obtained result is less than a seventh result threshold, and seek a standard deviation of subset received signal quality parameter values in measurement reports containing subset received signal strength parameter values less than a sixth condition threshold, and judge whether an obtained result is less than an eighth result threshold; wherein, N is an integer.
